# EUROPÄISCHE PATENTSCHRIFT

(11) **EP 0 950 461 B1**
(45) Veröffentlichungstag und Bekanntmachung des Hinweises auf die Patenterteilung: **28.11.2001**
(21) Anmeldenummer: 99106679.6
(22) Anmeldetag: 01.04.1999
(51) Int. Cl.: B23K 26/00, C23C 4/16

(54) **Verfahren und Vorrichtung zur Laserbearbeitung einer Innenfläche**
Process and device for laser machining of an internal surface
Procédé et dispositif d'usinage au laser d'une surface intérieure

(30) Priorität: 17.04.1998 DE 19817091; 12.06.1998 DE 19826138
(43) Veröffentlichungstag der Anmeldung: 20.10.1999
(73) Patentinhaber: VAW aluminium AG, 53117 Bonn (DE); NU TECH Gesellschaft für Lasertechnik, Materialprüfung und Messtechnik mbH, 24536 Neumünster (DE)
(72) Erfinder: Bady, Torsten, 23826 Todesfelde (DE); Bohling, Michael, 28203 Bremen (DE); Lensch, Günter, Dr., 22607 Hamburg (DE); Fischer, Alfons, Prof. Dr., 45239 Essen (DE); Feikus, Franz-Josef, Dr., 53123 Bonn (DE); Sach, Achim, 53757 Sankt Augustin (DE)
(74) Vertreter: Cohausz & Florack Patentanwälte

(56) Entgegenhaltungen:
- EP-A- 0 622 476
- DE-A- 3 114 701
- US-A- 5 043 548
- US-A- 5 196 671
- US-A- 5 359 172
- US-A- 5 426 278

## Beschreibung

Die Erfindung betrifft ein Verfahren zur Laserbearbeitung einer Innenfläche von aus einer Matrixlegierung bestehenden Leichtmetallmotorblöcken mit verschleißbeständigen Innenkolbenlaufflächen, wobei unter ortsfest gehaltenem Motorblock ein Strahlfleck von einem Laserlichtstrahl auf der Innenfläche erzeugt und darauf in einem kontinuierlichen Förder- und Schutzgas Legierungspulver aufgebracht wird sowie eine Vorrichtung zur Durchführung des Verfahrens, deren gattung aus der US-A-5 359 172 bekannt ist.

Ein Verfahren der eingangs genannten Art ist aus DE-A-31 14 701 bekannt. Die Laserenergie wird dabei für eine Auftragsschweißung verwendet.

Aus der DE 39 10 098 A1 ist ferner bekannt, Rohre mittels Lasern zu schweißen, wobei eine stabförmige Sonde mit einem Linsensystem in ein Werkstück eingetaucht wird.

Gemäß der US-A-5 359 172 kann eine stabförmige Sonde mit in einem Förder- und Schutzgas zugeführtem Legierungspulver für das ausbessern von Rohrinnenwänden verwendet werden.

Bei der Laseroberflächenbehandlung sollen auch flächendeckende Randschichtbehandlungen insbesondere auf der Werkstückinnenseite durch Aufbringung von Laserenergie über weite Bereiche ermöglicht werden.

Es soll ferner die Möglichkeit geschaffen werden, erhöhte Legierungsanteile in der Randschicht und intermetallische Verbindungen in der Randschicht zu erhalten. Ferner soll eine Kornverfeinung in der Randschicht, insbesondere bei Aluminiumguß- oder Knetlegierungen ermöglicht werden, wodurch bei metallischen Werkstoffen eine erhöhte Abriebfestigkeit, die beispielsweise in Motorkomponenten, aber auch andere verschleißbeanspruchten Werkzeugen, Rohren und Führungsbuchsen erreicht werden soll.

Bisherige verschleißbeständige Werkstücke wurden dadurch erhalten, daß das gesamte Material des Werkstücks mit einem Zusatzstoff legiert wird, beispielsweise einer Aluminiumgußlegierung bis zu 17 % Silizium zugesetzt wurde. Dieses Silizium läßt die abriebbeständiger zu gestaltende Oberfläche zwar in erwünschter Weise härter werden, andererseits jedoch wird das Werkstück insgesamt spröde und es ergeben sich erhebliche Probleme beim Guß.

Aufgabe der Erfindung ist daher die nachträgliche Einlegierung von Legierungsbestandteilen auf günstigem Wege in die Innenfläche eines Leichtmetallzylinderblocks, um die Oberfläche verschleißbeständiger zu machen. Mit einer Vorrichtung soll ein alternativer Antrieb für die axiale Bewegung ermöglicht werden, die auch eine flächendeckende Randschichtbehandlung gestattet.

Erfindungsgemäß wird diese Aufgabe durch die Merkmale der Patentansprüche 1 und 8 gelöst. Die Unteransprüche geben vorteilhafte Ausführungsformen der Erfindung wieder.

Bei dem erfindungsgemäßen Verfahren geht es um den Prozeß des Einlegierens, bei dem eine Randschichtbeeinflussung mit 100 %iger Aufmischung der Legierungsbestandteile in der Randzone erfolgt. Vorzugsweise wird mit reinem Siliziumpulver für den Legierungsprozeß im Aluminium gearbeitet. Bei Eindringtiefen von 0,2 bis 2 mm bilden die ausgeschiedenen Siliziumteile bei Teilchengrößen von 3 bis 25 *µ*m einen Volumenanteil von 17 bis 50 Vol.-% in der Randschicht aus. Dieses Ergebnis führt zu der erhöhten Verschleißbeständigkeit der Aluminiummatrixlegierung.

Es ist vorteilhaft, wenn das Laserlicht mit einer Streckenenergie von 20 bis 800 J/mm und einer Intensität von 0,5 bis 4,0 kW/mm² auf die Oberfläche gerichtet wird. Das Laserlicht ist so zu formen, daß eine "tophat-Verteilung" erfolgt.

Es sind bereits Laserlichtleistungen von 1,3 kW bis 4 kW mit Erfolg eingesetzt worden, wobei sowohl Nd-YAG-Laser und Hochleistungs-Diodenlaser verwendet wurden. Vorteilhaft ist Laserlicht mit den Wellenlängen 1064, 808, 940 nm für die Aufmischung in der Randzone, wobei die jeweiligen Prozeßparameter aufeinander abgestimmt werden müssen.

Dies gilt insbesondere für die einzustellende Vorschubgeschwindigkeit, die im Bereich von 300 bis 4000 mm/min liegen kann. Die jeweilige Vorschubgeschwindigkeit ist abhängig von der Intensität, d.h. von der Laserlichtleistung, der Fokusformung und den thermischen Bedingungen am Ort des Aufschmelzens, die durch die Wärmequelle, das Schmelzvolumen und die Abkühlrate bestimmt sind. Die Prozeßparameter sind so aufeinander abzustimmen, daß der Ausscheidungsprozeß von Hartstoffteilchen in der gewünschten Konzentration und Teilchengröße stattfindet.

Insbesondere ist durch die Verwendung eines Laserlichtstrahls, der am Ort seines Auftreffens ein Plasma aus Werkstoffmaterial erzeugt, die Einbringung von Pulver in das lokal erzeugte Plasma möglich. Durch die Einbringung von Legierungspulver mit einer Korngröße von vorzugsweise 45 *µ* bis 150 *µ* läßt sich bei einem Laserlichtstrahl von 2 kW auf 0,5 bis 2 mm Fleckdurchmesser eine Eindringtiefe von 1 mm erreichen, die eine genügend dicke verschleißbeständige Randschicht erzeugt, so daß diese Schicht sich nicht bei mechanischer Belastung vom Werkstück trennt. Gleichzeitig wird durch das gewählte Fördergas, z.B. ein Edelgas eine Trennung des Plasmas von reaktiver sauerstoffhaltiger Atmosphäre gewährleistet. Die Laserstrahlleistung wird derart gesteuert, daß eine geeignete Verteilung von Primär- und Sekundär-Hartphasen entsteht.

Vorteilhafterweise wird durch einen derart eingebrachten Siliziumanteil von 17 bis 50 % in der Oberfläche sichergestellt, daß nach wie vor elastische Eigenschaften in der Tiefe des Werkstücks vorliegen, die es möglich machen, die mechanischen Belastungen beispielsweise einer Zylinderlauffläche eines Motors aufzunehmen.

Wenn eine Energiestrahlsonde in einen zylindrischen Abschnitt eines Werkstückes eingetaucht wird sind erhebliche thermische Probleme zu lösen. Außer der durch das Werkstück abgestrahlten Wärme führen die geometrischen Verhältnisse zu einer erheblichen Erwärmung des Sondenkopfes, der erfindungsgemäß durch eine Wasserkühlung entgegengewirkt wird.

Weiter ist der Sondenkopf nach der Erfindung drehbar ausgestaltet, so daß, anders als in bisher bekannten Anlagen, in denen das Werkstück gedreht werden muß, dieses nunmehr ortsfest bleiben kann. Dies führt bei den zu bearbeitenden Motorblöcken zu einer erleichterten Handhabung, da nun Laserlicht und einzulegierendes Pulver in seinem Fördermedium jeweils über eine Drehdurchführung dem Sondenkopf zugeführt werden kann.

Bei der Bearbeitung von Innenräumen ist auch durch geeignete Pulver- und Gaszufuhr ein porenfreies Ergebnis möglich. Dabei ist durch richtige Schutzgasführung und konstruktive Maßnahmen sicherzustellen, daß aufgebrachtes Pulver sich nicht auf der Optik absetzt.

Zusätzlich zum Förder-wird auch ein separates Schutzgas neben dem Energiestrahl in der Sonde zugeführt.

Bei einer Laserlichtleistung von ca. 2 kW auf einen Strahlfleck von einem Durchmesser von ca. 0,5 bis 2 mm bei einem Vorschub von 300 bis 1500 mm pro Minute und bei einer Fördergaszuführung von ca. 10 bis 20 l pro Minute mit dazu zu rechnender Pulverzuführung von bis zu 10 g pro Minute kann so die Sonde z.B. auf einen sich spiralig wandernden definierten Oberflächenort räumlich konzentriert das Werkstück bearbeiten, wobei bei jeweils einer abgeschlossenen Drehung der Sonde durch ein gleichzeitiges Absenken der Sonde der jeweils bearbeitete Oberflächenort über die gesamte zu bearbeitende Oberfläche wandern kann.

Auf diese Weise wird eine Einlegierung von 17 bis 50 % Silizium in der Oberfläche erzeugt, wobei überschüssiges Siliziumpulver insbesondere mit dem Fördergas aus dem Werkstückinneren abtransportiert wird.

Bei erhöhter Laserlichtleistung von 4 kW auf einen Strahlfleck von einem Durchmesser von 2 bis 4 mm bei einem Vorschub von 1500 bis 4000 mm pro Minute und bei einer Fördergaszuführung von ca. > 30 l pro Minute mit dazu zu rechnender Pulverzuführung von bis zu 20 g pro Minute kann die Sonde auf einen spiralig wandernden Oberflächenort räumlich konzentriert werden.

Die Erfindung eignet sich primär für die Behandlung von Innenräumen, beispielsweise von Zylindern und Rohren mit einem Schachtverhältnis von mehr als 1 : 10 (gemessen als Durchmesser zu Tiefe), wobei die stabförmige Sonde sich besonders günstig ab Durchmessern von 50 mm und mehr einsetzen läßt. In der Sonde ist sowohl eine Zuführung von Siliziumpulver in einem Förder- und Schutzgas als auch eine Laserstrahlführung angeordnet, die einen Laserlichtstrahl über ein kollimierendes Linsensystem auf einen im Sondenkopf ausgebildeten Umlenkspiegel wirft. Mit dem Umlenkspiegel kann eine Fokusformung stattfinden, wobei er wegen der hohen Prozeßtemperaturen aus Kupfer gefertigt und mit Wassergekühlt wird. Darüber hinaus ist er vorzugsweise mit einer HR-Beschichtung versehen. Bei dem Spiegel handelt es sich um einen Facettenspiegel, bestehend aus 5 bis 50 Facetten mit kegelig, torisch oder parabolisch geformten Flächen, die auf Kegelsegmenten angeordnet sind.

Mit dieser Vorrichtung lassen sich Innenraumbearbeitungen eines Leichtmetallmotorblockes durchführen, wobei die Sonde, in der zusammen mit einer Zuführung von Siliziumpulver in einem Förder-und Schutzgas die Laserstrahlführung angeordnet ist, in den Motorblock eingesenkt werden kann, ohne diesen, wie zuvor nötig, als solchen zu drehen.

Durch einen an der Sonde angeordneten Drehantrieb für wenigstens den Endabschnitt der Pulverausbringdüse und der Energiestrahlausbringeinrichtung, und den teleskopischen Antrieb, der diesen Endabschnitt absenkt, ist durch Anordnung mehrerer Sonden ein gleichzeitiger Einsatz für eine Mehrzahl von Zylindern realisiert.

Dabei ist in den vorgeschlagenen stabförmigen Sonden ein einen parallelen Laserlichtstrahl über eine Auslängstrecke kollimierendes variables Linsensystem vor einem im Sondenkopf ausgebildeten Umlenkspiegel vorgesehen, wobei eine drehentkoppelte Durchführung für drei Prozeßmedienleiter, nämlich wenigstens für einen Kühlwasser-Zu- und -Rücklauf, ein Schutzgas für einer cross-jet sowie für pulverführendes Fördergas in dem auslängbaren freiverdrehbaren Sondenkopf am Randbereich vorgesehen ist.

Schließlich wird ein oberhalb des Laserstrahlaustritts angeordneter Crossjet-Austritt im Bereich des Laserlichtaustritts vorgesehen, der mit der Zuführung des Schutzgases in Verbindung steht, und beispielsweise nach unten gerichtet ist. Für die Pulveraustrittsdüse können je nach zu erzielender Einbringtiefe und Fortschreitungsgeschwindigkeit durch einfachen Austausch der auswechselbaren Endteile geeignete Geometrien gewählt werden.

Der im Bereich des Laseraustritts vorgesehene Crossjet ist mit einer Schutzegaszuführung und einer Kühlung ausgestattet. Bei den geringen Arbeitsabständen sind in den Innenräumen Strömungsverhältnisse vorhanden, die die Randschichtaufschmelzung und die Pulvereinbringung stark beeinflussen. Um hier eine porenfreie Randschicht zu erzielen, ist die Verwendung des Crossjets in der erfindungsgemäßen Weise erforderlich.

Mit der Laseroptik kann eine Schärfentiefe erzeugt werden, die mindestens 1/100 des Arbeitsabstandes beträgt. Damit ist die Toleranzbreite des Werkzeuges beschrieben, indem das Einlegieren ohne Nachregelung des Arbeitsabstandes möglich ist. Es können sowohl nebeneinander liegende Spuren mit Überlappungsbereichen erzeugt werden als auch versetzte und/oder spiralförmige Einzelspuren, die eine höhere Wirtschaftlichkeit zur Folge haben. Wenn die von dem Laser erzeugten Auflegierungszonen überlappen, entsteht eine Vollbelegung der Zylinderlauffläche. Bei einer versetzten oder spiralförmigen Laserführung wird eine Teilbelegung erzielt, die einen gleich guten Verschleißschutz wie bei der Vollbelegung ermöglicht, sofern die in dem Zylinder laufenden Kolben/Kolbenringe breiter sind als der Abstand zwischen den durch den Laser erzeugten Einzelspuren.

Es ist auch möglich, auf der Zylinderlauffläche eine Vollbelegung im Umkehrpunkt des Kolbens und eine Teilbelegung auf dem Rest der Lauffläche und damit eine Kombination beider Belegungsarten zu erzielen. Auch anders gestaltete Laserspuren, wie z.B. mäander- oder netzförmige Strukturen, sind mit der erfindungsgemäßen Vorrichtung ausführbar. Bei einer Teilbelegung lassen sich auch gezielt Vertiefungen, wie z.B. Schmieröltaschen, herstellen, in denen sich das Schmiermittel sammelt.

Insgesamt läßt sich durch die erfindungsgemäße Vorrichtung eine recht enge Annäherung der Sonde an das Werkstück von beispielsweise 70 mm erzielen, wesentlich weniger, als bei bisherigen pulverausbringenden Einrichtungen möglich war, die im Bereich von > 80 mm lagen. Durch geeignete Gasführung wird eine ruhige Prozeßführung erreicht. Ebenso ist es möglich, eine sonst noch notwendige Wärmebehandlung auf diese Weise einzusparen.

Bezüglich des Sondenkopfes muß darauf hingewiesen werden, daß außer dem Laserlicht auch ein Kühlmedium (z.B. H₂O) und ein zusätzliches Schutzgas für den Crossjet, u.U. Luft, neben den Prozeßgasesn, in denen ein Pulver mitgeführt ist, jeweils über die Drehführung in den kontinuierlich sich drehenden äußeren Sondenkopf eingeleitet werden.

Dies wird erfindungsgemäß durch eine drehentkoppelte Durchführung für Kühlwasser-Zu- und -Rücklauf erreicht. Gleichzeitig ist der Laserstrahl in diesem Bereich frei verlaufend.

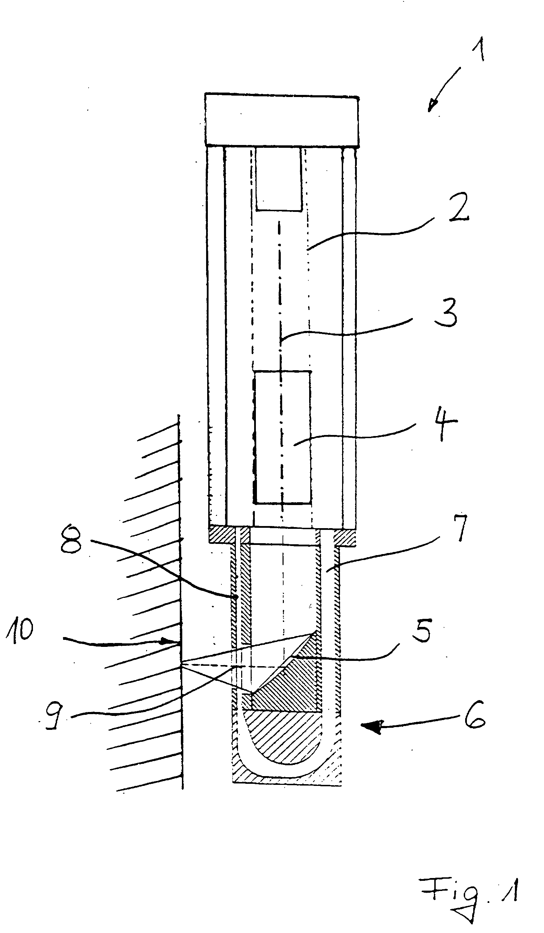

In Figur 1 ist schematisch eine Vorrichtung zur Laserbearbeitung einer Innenfläche dargestellt. Sie besteht aus einer stabförmigen Sonde 1, einer Laserstrahlführung 2 für einen Laserlichtstrahl 3, einem kollimierenden Linsensystem 4 und einem Umlenkspiegel 5. Der Umlenkspiegel 5 ist in einem verdrehbaren Sondenkopf 6 angeordnet, in dem Leitungen 7, 8 für ein Schutzgas untergebracht sind. Das durch die Leitung 7 eintretende Schutzgas wird im unteren Teil des Sondenkopfes 6 umgelenkt und tritt über Leitung 8 aus dem Sondenkopf wieder aus. Dabei kreuzt es den vom Umlenkspiegel 5 reflektierten Laserlichtstrahl 3 und bildet dabei den Crossjet 9. Durch die hohe Energie des Pulvermaterials im Auftreffpunkt auf der Werkstückoberfläche 10 wird ein Teil des Pulvermaterials zurückgeworfen. Der Crossjet 9 verhindert, daß das zurückgeworfene Material auf den Umlenkspiegel 5 fällt.

## Patentansprüche

1. Verfahren zur Laserbearbeitung einer Innenfläche von aus einer Matrixlegierung bestehenden Leichtmetallmotorblöcken mit verschleißbeständigen Innenkolbenlaufflächen, wobei unter ortsfest gehaltenem Motorblock ein Strahlfleck von einem Laserlichtstrahl auf der Innenfläche erzeugt und darauf in einem kontinuierlichen Förder- und Schutzgas Legierungspulver aufgebracht wird,
**dadurch gekennzeichnet,**
**daß** der Laserstrahl am Ort des Auftreffens ein Plasma aus der Matrixlegierung erzeugt, wobei mit mindestens einer drehbaren Sonde gearbeitet und wobei während der Drehung der Sonde diese gleichzeitig entlang der Zylinderachse unter Zugabe eines Legierungspulvers verschoben wird,
**daß** in einem verdrehbaren Sondenkopf über vier Prozeßmedienleiter zugeführt werden: Kühlwasser für wenigstens einen Kühlwasserzu- und -rücklauf, Schutzgas für einen Crossjet sowie ein pulverführendes Förder- und Schutzgas,
**daß** in dem Fördergas jeweils über eine Drehdurchführung dem Sondenkopf das Legierungspulver zugeführt und auf die Innenfläche kontinuierlich aufgebracht wird, und daß das Legierungspulver im Strahlfleck aufgeschmolzen und in einer Tiefe von 0,2 bis 2 mm einlegiert wird.

2. Verfahren nach Anspruch 1,
**dadurch gekennzeichnet,**
**daß** das Schutzgas im unteren Teil der Sonde umgelenkt wird und dabei den Laserstrahl als Crossjet kreuzt.

3. Verfahren nach Anspruch 1 oder 2,
**dadurch gekennzeichnet,**
**daß** unter Einwirkung des Strahlflecks eine Auflegierungszone erzeugt wird, die sich entsprechend der Drehung der Sonde in spiralförmigen Windungen über die gesamte zu bearbeitende Oberfläche erstreckt.

4. Verfahren nach einem der vorhergehenden Ansprüche,
**dadurch gekennzeichnet,**
**daß** die benachbarten Windungen der Auflegierungszone einander überlappen.

5. Verfahren nach Anspruch 1 oder 2,
**dadurch gekennzeichnet,**
**daß** die Windungen mit einem Abstand über die Innenkolbenlaufflächen gelegt werden, wobei der Abstand kleiner ist als die Breite der Kolbenringe.

6. Verfahren nach Anspruch 1 oder 2,
**dadurch gekennzeichnet,**
**daß** die Zylinderlauffläche im Umkehrpunkt des Kolbens eine Vollbelegung und im Rest der Lauffläche eine Teilbelegung durch eindiffundierte Legierungsteilchen aufweist.

7. Verfahren nach einem der vorhergehenden Ansprüche,
**dadurch gekennzeichnet,**
**daß** bei einer Laserlichtleistung von 1,3 - 4 kW mit einem Strahlfleck von einem Durchmesser von ca. 0,5 bis 4 mm bei einem Vorschub von 300 bis 4000 mm/min, bei einer Prozeßgaszuführung von 10 bis 20 l/min und einer Pulverzuführung von 1 bis 10 g/min bzw. von 1500 bis zu 4000 mm/min Vorschub bei einer Prozeßgasführung von > 30 l/min eine Einlegierung von 17 bis 50 % Silizium in der Oberfläche erfolgt, wobei das Silizium als Primärsilizium in Größen von 3 - 25 *µ*m ausgeschieden wird.

8. Vorrichtung zur Laserbearbeitung einer Innenfläche von aus einer Matrixlegierung bestehenden Leichtmetallmotorblöcken mit verschleißbeständigen Innenkolbenlaufflächfen, wobei unter ortsfest gehaltenem Hohlkörper ein Strahlfleck von einem Laserlichtstrahl auf der Innenfläche erzeugt und darauf in einem kontinuierlichen Förder- und Schutzgas Legierungspulver aufgebracht wird, umfassend :
- eine stabförmige Sonde (1), in der eine Laserstrahlführung (2) angeordnet ist, die einen Laserlichtstrahl (3) über ein kollimierendes Linsensystem (4) auf einen im Sondenkopf ausgebildeten Umlenkspiegel (5) wirft,
- eine axiale Bewegungseinrichtung der Sonde (1);
**gekennzeichnet durch**
- eine in der sonde zusammen mit der Laserstrahlfuhrung (2) angeordnete Zuführung von Legierungspulver in einem Förder- und Schutzgas;
- einen verdrehbaren Sondenkopf, über den in 4 Prozessmedienleiter zugeführt werden: Kühlwasser für wenigstens einen Kühlwasserzu- und rücklauf, Schutzgas für einen Cross-jet sowie pulverführendes Förder- und Schutzgas;
- einen an der Sonde angeordneten Drehantrieb für den Abschnitt einer Pulverausbringdüse und einer Laserstrahlausbringeinrichtung, die im Reflektionswinkelbereich des Umlenkspiegels angeordnet ist, nen teleskopischen Antrieb für den Abschnitt einer Pulverausbringdüse und für die Laserstrahlausbringeinrichtung.

9. Vorrichtung nach Anspruch 8,
**dadurch gekennzeichnet,**
**daß** im Bereich des Laserstrahlaustritts ein Crossjet vorgesehen ist, der mit einer Schutzgaszuführung und einer Kühlung ausgestattet ist.

10. Vorrichtung nach einem der vorhergehenden Ansprüche 8 oder 9,
**dadurch gekennzeichnet,**
**daß** der Umlenkspiegel als Facettenspiegel mit kegelförmig, torisch oder parabolisch geformten Facetten ausgebildet ist, die auf Kegelsegmentflächen angeordnet und von innen gekühlt sind.

11. Vorrichtung nach einem der vorhergehenden Ansprüche 8 bis 10,
**dadurch gekennzeichnet,**
**daß** der Umlenkspiegel aus Kupfer gefertigt und mit einer HR-Beschichtung versehen ist.

12. Vorrichtung nach einem der vorhergehenden Ansprüche 8 bis 11,
**dadurch gekennzeichnet,**
**daß** ein variables Linsensystem eine Schärfentiefe von mindestens 1/100 des Arbeitsabstandes ermöglicht, gemessen von Achsmitte zur Innenfläche des Hohlkörpers und das variable Linsensystem die Anpassung an unterschiedliche Durchmesser und Divergenzen des Laserstrahls ermöglicht.

13. Vorrichtung nach einem der vorhergehenden Ansprüche 8 bis 12,
**dadurch gekennzeichnet, daß** die Crossjetdüse mit einer Kühlung ausgestattet ist.

14. Vorrichtung nach einem der vorhergehenden Ansprüche 8 bis 13,
**dadurch gekennzeichnet,**
**daß** ein Überdruck in der gekapselten Sonde die optischen Komponenten vor Verschmutzung schützt.

## Claims

1. A process of laser-treating an inner face of light metal engine blocks consisting of a matrix alloy and having wear-resistant inner piston running faces, wherein, with the engine block being held in a fixed position, a beam spot is generated by a laser light beam on the inner face on to which alloying powder is applied in a continuous conveying and protective gas flow,
**characterised in**
**that**, in the point of impact, the laser beam produces a plasma from the matrix alloy, in the course of which process use is made of at least one rotatable probe which, while being rotated, is simultaneously displaced along the cylinder axis while an alloying powder is being added;
**that**, in a rotatable probe head, four process medium guiding lines are used to supply cooling water for at least one cooling water supply and return pipe, protective gas for a cross jet and a powder guiding conveying and protective gas;
**that**, in the conveying gas, via rotary guiding means, the probe head is supplied with alloying powder which is continuously applied to the inner face, and that the alloying powder is melted in the beam spot and alloyed in at a depth of 0.2 to 2 mm.

2. A process according to claim 1,
**characterised in**
**that** the protective gas is deflected in the lower part of the probe and, in the process, crosses the laser beam in the form of a cross jet.

3. A process according to claims 1 or 2,
**characterised in**
**that** under the effect of the beam spot, there is produced an alloyed-on zone which, in accordance with the rotation of the probe, extends in spiral-like windings across the entire surface to be treated.

4. A process according to any one of the preceding claims,
**characterised in**
**that** the adjoining windings of the alloyed-on zone overlap one another.

5. A process according to claim 1 or 2,
**characterised in**
**that** the windings are spaced when being applied to the inner piston running faces, with the distance between same being smaller than the width of the piston rings.

6. A process according to claim 1 or 2,
**characterised in**
**that** the cylinder running face, in the point of reversal of the piston, is fully covered and in the remaining part of the running face partially covered by diffused-in alloy particles.

7. A process according to any one of the preceding claims,
**characterised in**
**that**, with a laser light power of 1.3 - 4 kW with a beam spot diameter of approx. 05. to 4 mm with a feed of 300 to 4000 mm/min, with a process gas supply of 10 to 20 l/min and a powder supply of 1 to 10 g/min and, respectively, of 1500 to 4000 mm/min feed, with a process gas supply of > 30 l/min, 17 to 50 % of silicon is alloyed into the surface, with the silicon being separated in the form of primary silicon in particle sizes of 3 to 25 µm.

8. A device for laser-treating an inner face of light metal engine blocks consisting of a matrix alloy and having wear-resistant inner piston running faces, wherein, with the engine block being held in a fixed position, a beam spot is generated by a laser light beam on the inner face on to which alloying powder is applied in a continuous conveying and protective gas flow, comprising:
- a bar-shaped probe (1) in which there are arranged laser beam guiding means (2) which project a laser light beam (3) via a collomating lens system (4) on to a deflecting mirror (5) provided in the probe head,
- an axial movement device of the probe (1),
**characterised by**
- supplying means for alloying powder in a conveying and protective gas, which supplying means, together with the laser beam guiding means (2), are arranged in the probe;
- a rotatable probe head by means of which cooling water for at least one cooling water supply and return pipe, protective gas for a cross jet and powder guiding conveying and protective gas are supplied in 4 process medium guiding lines;
- a rotary drive arranged at the probe for the portion of a powder ejection nozzle and a laser beam emission device arranged in the region of the reflection angle of the deflecting mirror;
- a telescopic drive for the portion of a powder ejection nozzle and for the laser beam emission device.

9. A device according to claim 8,
**characterised in**
**that** in the region of the laser beam exit, there is provided a cross jet which is provided with protective gas guiding means and cooling means.

10. A device according to any one of the preceding claims 8 or 9,
**characterised in**
**that** the deflecting mirror is provided in the form of a facetted mirror with conically, torically or parabolically shaped facettes which are arranged on conical segment faces and cooled from inside.

11. A device according to any one of the preceding claims 8 to 10,
**characterised in**
**that** the deflecting mirror is produced from copper and provided with a HR coating.

12. A device according to any one of the preceding claims 8 to 11,
**characterised in**
**that** a variable lens system permits a depth of sharpness of at least 1/100 of the operating distance, measured from the axis centre to the inner face of the hollow member, and that the variable lens system permits adaptation to different diameters and divergencies of the laser beam.

13. A device according to any one of the preceding claims 8 to 12,
**characterised in**
**that** the cross jet nozzle is provided with a cooling system.

14. A device according to any one of the preceding claims 8 to 13,
**characterised in**
**that** an excess pressure in the encapsulated probe protects the optical components from becoming dirty.

## Revendications

1. Procédé pour le traitement au laser d'une surface intérieure de bloc-moteur en métaux légers, constituée avec un alliage matriciel, comportant des surfaces de coulissement intérieures résistantes à l'usure pour des pistons, dans lequel, tandis que l'on maintient le bloc-moteur stationnaire, on produit sur la surface intérieure une tache d'un faisceau lumineux laser, et l'on applique sur celle-ci une poudre d'alliage dans un gaz propulseur et protecteur continu,
**caractérisé en ce que** le faisceau laser produit à l'emplacement d'incidence un plasma à partir de l'alliage matriciel, et l'on travaille avec au moins une sonde rotative, et pendant la rotation de la sonde celle-ci est déplacée simultanément le long de l'axe du cylindre avec addition d'une poudre d'alliage,
**en ce que** l'on apporte, dans une tête de sonde rotative et via quatre conduites à fluide : de l'eau de refroidissement pour au moins une amenée et un retour d'eau de refroidissement, un gaz protecteur pour une projection croisée, ainsi qu'un gaz propulseur et protecteur amenant la poudre, et
**en ce que** l'on amène dans le gaz propulseur la poudre d'alliage à la tête de sonde au moyen d'une traversée rotative respective et on l'applique en continu sur la surface intérieure, et **en ce que** la poudre d'alliage est mise en fusion dans la tache du faisceau et amenée à former un alliage sur une profondeur de 0,2 à 2 mm.

2. Procédé selon la revendication 1, **caractérisé en ce que** le gaz protecteur est dévié dans la partie inférieure de la sonde, et croise alors le faisceau laser sous forme d'un jet croisé.

3. Procédé selon l'une ou l'autre des revendications 1 et 2, **caractérisé en ce que** sous l'action de la tache du faisceau, on produit une zone d'alliage qui s'étend sur la totalité de la surface à traiter sur des spires de forme spiralée correspondant à la rotation de la sonde.

4. Procédé selon l'une des revendications précédentes, **caractérisé en ce que** les spires voisines de la zone d'alliage se chevauchent mutuellement.

5. Procédé selon l'une ou l'autre des revendications 1 et 2, **caractérisé en ce que** les spires sont posées avec une distance au-dessus de la surface intérieure de coulissement pour les pistons, ladite distance étant plus petite que la largeur des segments de piston.

6. Procédé selon l'une ou l'autre des revendications 1 et 2, **caractérisé en ce que** la surface de coulissement cylindrique présente une couverture complète au niveau du point de rebroussement du piston, et une couverture partielle sur le reste de la surface de coulissement, avec des particules d'alliage intégrées par diffusion.

7. Procédé selon l'une des revendications précédentes, **caractérisé en ce que** pour une puissance d'illumination laser de -1,3 à 4 kW et une tache de faisceau d'un diamètre d'environ 0,5 à 4 mm, une avance de 300 à 4.000 mm/min, une amenée de gaz de traitement de 10 à 20 l/minute et un apport de poudre de 1 à 10 g/minute, ou respectivement une vitesse d'avance de 1500 à 4.000 mm/min et un apport de gaz de traitement supérieur à 30 l/minute, il se produit une mise en alliage de 17 à 50 % de silicium dans la surface, et le silicium se sépare sous forme de silicium primaire sous des tailles de 3 à 25 microns.

8. Appareil pour le traitement au laser d'une surface intérieure de bloc-moteur en métaux légers constitué en alliage matriciel, avec des surfaces de coulissement intérieures résistantes à l'usure pour des pistons, dans lequel se produit une tache d'un faisceau laser sur la surface intérieure tandis que le corps creux est maintenu stationnaire, et il est appliqué sur cette surface une poudre d'alliage dans un gaz propulseur et protecteur continu, comprenant :
- une sonde en forme de barre (1) dans laquelle est agencé un guidage (2) pour un faisceau laser, qui projette un faisceau laser (3) via un système à lentille de collimation (4) sur un miroir de renvoi (5) réalisé dans la tête de la sonde, et
- un dispositif de déplacement axial de la sonde (1) ;
**caractérisé par** :
- une admission de poudre d'alliage dans un gaz propulseur et protecteur, agencée dans la sonde conjointement avec le guidage (2) pour le faisceau laser ;
- une tête de sonde rotative, via laquelle on admet par l'intermédiaire de quatre conduites à fluide : de l'eau de refroidissement pour au moins une admission et un retour d'eau de refroidissement, du gaz protecteur pour une projection croisée, ainsi qu'un gaz de propulsion et de protection qui transporte la poudre ;
- un agencement rotatif, agencé sur la sonde, pour le tronçon d'une buse de déposition de poudre et un dispositif d'émission de faisceau laser, agencé dans la plage angulaire de réflexion du miroir de renvoi, et
- un entraînement télescopique pour le tronçon d'une buse de déposition de poudre et pour le dispositif d'émission de faisceau laser.

9. Appareil selon la revendication 8, **caractérisé en ce qu'**il est prévu un jet croisé dans la région de la sortie du faisceau laser, qui comporte une amenée de gaz protecteur et un refroidissement.

10. Appareil selon l'une ou l'autre des revendications 8 et 9, **caractérisé en ce que** le miroir de renvoi est réalisé sous la forme d'un miroir à facettes, avec des facettes de forme conique, de forme torique, ou parabolique, qui sont agencées sur des surfaces en segments de cône, et refroidies depuis l'intérieur.

11. Appareil selon l'une des revendications 8 à 10, **caractérisé en ce que** le miroir de renvoi est réalisé en cuivre, et pourvu d'un revêtement HR.

12. Appareil selon l'une des revendications 8 à 11, **caractérisé en ce qu'**un système à lentille variable permet une profondeur de netteté d'au moins 1/100 de l'écartement de travail, mesuré depuis le milieu axial jusqu'à la surface intérieure du corps creux, et **en ce que** le système à lentille variable permet d'adapter le faisceau laser à des diamètres différents et des divergences différentes.

13. Appareil selon l'une des revendications 8 à 12, **caractérisé en ce que** la buse à jet croisé est équipée d'un refroidissement.

14. Appareil selon l'une des revendications 8 à 13, **caractérisé en ce qu'**une surpression dans la sonde en capsule protège les composantes optiques vis-à-vis d'un encrassement.
